# FASCICULE DE BREVET EUROPEEN

(11) **EP 2 314 492 B1**
(45) Date de publication et mention de la délivrance du brevet: **30.05.2012**
(21) Numéro de dépôt: 10186498.1
(22) Date de dépôt: 05.10.2010
(51) Int. Cl.: B61C 7/04, B61C 17/00, B61D 3/10

(54) **Rame ferroviaire bi-mode**
Eisenbahn-Garnitur mit dualem Antrieb
Rail convoy with dual drive

(30) Priorité: 23.10.2009 FR 0957468
(43) Date de publication de la demande: 27.04.2011
(73) Titulaire: ALSTOM Transport SA, 92300 Levallois-Perret (FR)
(72) Inventeur: Meyer, Laurent, 67240 Schirrhoffen (FR); Geoffroy, Pascal, 67500 Marienthal (FR)

(56) Documents cités:
- EP-A1- 0 633 173
- EP-A1- 1 955 917
- DE-A1- 19 718 425

## Description

L'invention concerne une rame ferroviaire modulaire constituée de plusieurs véhicules, et un convoi ferroviaire formé de telles rames.

Une telle rame est divulguée par le document EP 1 955 917 A1.

Plus particulièrement, l'invention a pour but de créer des rames et convois présentant un plancher bas sur toute la longueur de la rame. Un plancher « bas » est soit intégralement plat sur toute sa longueur, soit en partie plat et en partie en pentes, notamment au-dessus des bogies. Pour être qualifié de plancher bas intégral, le plancher doit être continu sur toute la longueur de la rame et il peut présenter des pentes inférieures ou égales à 8%. Par continu, on entend sans discontinuité - comme une marche. Une pente inférieure ou égale à 8% est considérée comme pouvant être franchie sans difficulté par une personne à mobilité réduite (personne âgée, handicapée, en fauteuil roulant, avec poussette...) qui peuvent ainsi accéder à toute la longueur de la rame.

Les rames ferroviaires bi-mode peuvent être alimentées en énergie par deux types d'alimentation, un premier type étant un réseau d'alimentation extérieur au véhicule, au moyen par exemple d'une caténaire ou d'un troisième rail, un second type étant une unité d'alimentation embarquée, généralement à partir d'un groupe électrogène comprenant un moteur diesel, une génératrice, et produisant l'énergie nécessaire pour alimenter les moteurs de traction électrique.

Les équipements nécessaires pour le fonctionnement en bi-mode sont lourds et encombrants. Les rames ferroviaires bi-mode de l'état de la technique présentent l'inconvénient de ne pas être en plancher bas intégral, et notamment de comporter des marches au-dessus de certains bogies. Toute la longueur de la rame n'est donc pas accessible aux voyageurs à mobilité réduite, qui ne peuvent franchir les marches.

Sur une rame courte, c'est-à-dire ne comportant que trois ou quatre véhicules, l'espace pour loger les équipements est réduit. Les rames de trois véhicules bi-mode de l'état de la technique ne sont que mono-tension, et les rames de quatre véhicules bi-mode de l'état de la technique sont bi-tension. L'invention concerne également les rames bi-mode bi-tension en formation courte de trois véhicules, et des rames bi-mode tri-tension en formation courte de quatre véhicules.

De plus, afin que la rame ou le convoi présente un bon comportement dynamique et limite l'usure des voies, il est nécessaire que les valeurs des charges des essieux soient les plus faibles et les plus voisines que possible. En tout état de cause, elles doivent être inférieures à la charge à l'essieu maximale autorisée par le réseau ferroviaire. Il est aussi nécessaire que les matériels embarqués soient distribués de la manière la plus appropriée possible, pour éviter les surdimensionnements et les sur-coûts. La solution généralement adoptée consiste à répartir les matériels le long du véhicule, pour la plupart dans des coffres disposés en sous-châssis, sous les compartiments pour les voyageurs. La répartition des matériels doit être faite sans trop affecter la capacité en voyageurs, sans compromettre le confort de ceux-ci en réduisant le volume alloué à chacun d'eux ou en gênant les accès aux places assises et aux différentes commodités (bar, toilettes, espaces de rangement pour les bagages) et sans gêner le cheminement du personnel le long de la rame. L'invention vise également à résoudre ces problèmes.

L'invention a pour but d'améliorer la conception des rames ferroviaires, et notamment de remédier aux inconvénients des rames et convois connus et de satisfaire autant qu'il est possible aux conditions mentionnées ci-dessus.

A cette fin, l'invention concerne une rame ferroviaire modulaire formée d'au moins trois véhicules, comportant deux véhicules d'extrémité reposant chacun à leur extrémité libre sur un bogie moteur comportant au moins un moteur de traction électrique, et sur leur extrémité opposée sur un essieu d'un bogie porteur inter-caisse à deux essieux porteurs, au moins un véhicule interposé entre les deux véhicules d'extrémité reposant à chaque extrémité sur un essieu d'un bogie porteur inter-caisse, et des matériels embarqués comprenant au moins un dispositif de raccordement à un réseau d'alimentation en énergie électrique, au moins un transformateur d'énergie, au moins un coffre électronique de traction, au moins un dispositif de freinage rhéostatique, au moins un groupe électrogène, au moins un réservoir de carburant liquide, au moins un ensemble d'accumulateurs, telle que au moins un réservoir de carburant est disposé en sous-châssis d'un véhicule d'extrémité, au moins un ensemble d'accumulateurs est disposé à l'intérieur d'un véhicule d'extrémité approximativement au-dessus du bogie moteur, tous les autres matériels embarqués étant disposés en toiture, répartis sur les véhicules de la rame.

La rame selon l'invention peut de plus présenter une ou plusieurs des caractéristiques suivantes :
- chaque véhicule d'extrémité comprend au moins un groupe électrogène, un dispositif de freinage rhéostatique et un coffre électronique de traction, et au moins un véhicule intercalé est un véhicule intermédiaire, comprenant au moins un dispositif de raccordement à un réseau d'alimentation en énergie électrique et au moins un transformateur d'énergie,
- le véhicule interposé est un véhicule intermédiaire comportant deux dispositifs de raccordement à un réseau d'alimentation en énergie électrique adaptés pour collecter deux tensions différentes d'alimentation en énergie,
- au moins un véhicule interposé est un véhicule additionnel comprenant un transformateur d'énergie et deux groupes moto-compresseurs,
- au moins un véhicule interposé est un véhicule complémentaire reposant sur un bogie à deux essieux disposé à l'une de ses extrémités, et sur un essieu d'un bogie porteur inter-caisse à l'autre extrémité,
- au moins un véhicule complémentaire comprend un coffre électronique de traction et un dispositif de freinage rhéostatique disposés en toiture,
- au moins un véhicule complémentaire comprend au moins un groupe électrogène disposé en toiture et un réservoir de carburant disposé en sous-châssis,
- le bogie du véhicule complémentaire disposé à l'une de ses extrémités est un bogie porteur,
- le bogie du véhicule complémentaire disposé à l'une de ses extrémités est un bogie moteur,
- les extrémités des véhicules complémentaires reposant sur un bogie à deux essieux sont adjacentes,
- un transformateur d'énergie est adapté pour recevoir une ou deux tensions d'alimentation en énergie, et est associé à deux bogies moteurs,
- un transformateur d'énergie est associé à chaque bogie moteur, et est adapté pour recevoir une, deux ou trois tensions d'alimentation en énergie,
- elle comporte un plancher continu dans le couloir central sur toute sa longueur, pouvant présenter des pentes inférieures ou égales à 8%,

L'invention consiste également en un convoi ferroviaire comportant au moins deux rames selon l'invention, reliées par des moyens de liaison.

D'autres caractéristiques et avantages de l'invention ressortiront de la description qui va suivre de formes de réalisation de celle-ci données à titre d'exemples non limitatifs et illustrées par les dessins joints dans lesquels :
- la figure 1 montre l'implantation des matériels embarqués dans une rame selon l'invention à trois véhicules, en vue de côté,
- la figure 2 montre l'implantation des matériels embarqués dans une autre rame selon l'invention, à quatre véhicules, en vue de côté.
- la figure 3 montre l'implantation des matériels embarqués dans une autre rame selon l'invention, à six véhicules, en vue de côté.

Les rames ferroviaires selon l'invention représentées sur les figures sont des rames à traction électrique, comportant au moins un bogie moteur, comportant au moins un moteur électrique de traction. Ici, les moteurs de traction choisis sont du type à aimant permanent alimentés en tension alternative triphasée variable entre environ 600 V et 1200 V. Ce choix impose la transformation de l'énergie électrique disponible sur le réseau aérien d'alimentation électrique transmise par un dispositif de raccordement tel qu'un pantographe, ou la transformation de l'énergie électrique fournie par le groupe diesel pour parvenir à une telle tension électrique. Il en résulte la présence, en tant qu'équipement d'alimentation en énergie de traction, généralement d'au moins un transformateur d'énergie et de plusieurs inductances. Pour empêcher la transmission entre le réseau aérien et la rame de parasites induits ou dus aux commutations, on prévoit également dans l'équipement d'alimentation au moins un filtre à inductance.

Les équipements embarqués nécessaires à la collecte, à la transformation de l'énergie électrique et d'une manière générale, à la traction comprennent des équipements relativement lourds, mais de masses non uniformes. L'uniformisation des charges par bogie voire par essieu ne peut être obtenue que par une répartition judicieuse de ces équipements sur les véhicules de la rame.

Ces équipements lourds comprennent les dispositifs de raccordement au réseau aérien d'alimentation en énergie tels que des pantographes, les équipements d'alimentation en énergie de traction, comprenant des transformateurs et des inductances, des coffres électroniques de traction destinés à fournir aux moteurs de traction sous une forme appropriée l'énergie provenant du réseau aérien - éventuellement par l'intermédiaire d'un transformateur d'énergie -, des équipements d'alimentation en énergie auxiliaire pour alimenter notamment des moteurs auxiliaires, et des condensateurs de filtre. On peut également ranger dans cette catégorie notamment les batteries d'accumulateurs pour fournir l'énergie aux équipements auxiliaires basse tension du véhicule, les groupes moto-compresseurs et les réservoirs pour les fluides mis en oeuvre dans ces groupes, ainsi que les dispositifs de freinage rhéostatique.

Les rames selon l'invention comprennent différents véhicules, certains reposant sur trois essieux et d'autres reposant sur deux essieux. On profite de la disparité des masses des différents matériels pour charger les véhicules reposant sur trois d'essieux et pour alléger les véhicules reposant sur deux essieux, dans la mesure du possible. La notion d'essieu ou de bogie regroupe, pour un essieu moteur ou un bogie moteur, l'essieu ou le bogie proprement dits et leur(s) moteur(s). Ainsi, dans la suite, on appellera « essieu moteur » l'ensemble constitué par un essieu proprement dit et son moteur de traction, « bogie moteur » l'ensemble constitué par deux essieux moteurs, « essieu porteur » un essieu non motorisé, et « bogie porteur » un bogie non motorisé.

Un autre élément à prendre en compte est la fonction des équipements à répartir, que l'on peut pour la plupart classer dans l'un des trois groupes suivants : équipements de traction (comprenant les moteurs de traction, les coffres électronique de traction, les rhéostats de freinage, les groupes électrogène, leurs réservoirs et batteries associées), équipements de fourniture d'énergie électrique aux équipements de traction (pantographes, transformateurs d'énergie, disjoncteurs...), et équipements de fourniture d'énergie pneumatique, étant entendu qu'il n'est pas souhaitable de disséminer les équipements appartenant à un même groupe, afin de limiter la longueur des câbles de transmission (électriques ou fluidiques) dans chaque groupe.

Un autre élément à prendre en compte est le fait que le nombre des équipements lourds, et notamment des équipements d'alimentation en énergie de traction, est variable en fonction de la contrée dans laquelle ou des contrées dans lesquelles la rame doit être utilisée, certains de ces équipements étant cependant obligatoirement présents sur toutes les rames.

En fonction de la tension disponible sur le réseau aérien, des équipements différents, par exemple des transformateurs d'énergie différents, peuvent être proposés en option. Si la rame doit circuler dans des contrées où les tensions de réseau sont différentes, elle doit être du type bi-tension, voire tri-tension.

La transformation de l'énergie électrique du réseau en énergie utilisable par les moteurs de traction nécessite plusieurs étapes, car aucun réseau ne délivre exactement la tension sous la forme nécessaire utilisable par les moteurs de traction, qu'ils soient à aimants permanents ou asynchrones. La tension la plus faible offerte par les réseaux visés par la présente invention est du 1500 V en continu ou du 3000 V en continu. Il a été choisi ici de prévoir que l'alimentation des moteurs de traction de chaque bogie moteur soit faite en sortie de coffres électronique de traction à onduleur alimenté sous 1500 V en continu ou 3000 V en continu selon le cas. Comme des appareils annexes, tels que des moteurs auxiliaires doivent être alimentés en triphasé 400 V, il a également été choisi de prévoir pour eux des équipements d'alimentation en énergie auxiliaire comprenant un convertisseur statique fournissant cette tension, ainsi que, pour des batteries d'accumulateurs, du 72 V en continu, à partir du 1500 V en continu ou du 3000 V en continu ou encore d'une autre tension disponible. Les rames en formation de trois véhicules selon l'invention sont dimensionnées pour être mono ou bi-tension, et lorsque la rame comporte au moins quatre véhicules, pour être mono, bi ou tri-tension.

Chaque rame comporte en dehors des équipements qui viennent d'être décrits, différentes armoires contenant essentiellement pour les unes des composants électrotechniques et pour les autres des composants électroniques, par exemple des armoires basse tension et des armoires électroniques. Comme elles doivent être accessibles au conducteur, elles sont à cette fin disposées dans les cabines prévues pour celui-ci dans la rame. La rame comporte aussi des appareils de climatisation séparés pour chacune des cabines et pour chacun des compartiments destinés aux voyageurs. Au moins un disjoncteur continu est prévu pour couper l'alimentation des onduleurs en cas de surintensité ou de surtension. Des groupes moto-compresseurs déjà cités et des réservoirs de fluide permettent d'alimenter en fluides variés sous pression un certain nombre d'appareils, par exemple des freins et des vérins d'ouverture et de fermeture de portes, etc..

Des dispositifs de freinage rhéostatique permettent, dans l'hypothèse où il est impossible d'évacuer dans le réseau d'alimentation, l'énergie électrique inutilisée lors d'un freinage, de dissiper cette énergie électrique inutilisée.

Les emplacements et volumes pour recevoir les transformateurs d'énergie sont dimensionnés pour le transformateur le plus lourd et le plus encombrant, c'est-à-dire le transformateur d'énergie tri-tension. De plus, les emplacements de certains équipements sont choisis en priorité de manière à limiter la longueur des câbles (électriques ou fluidiques).

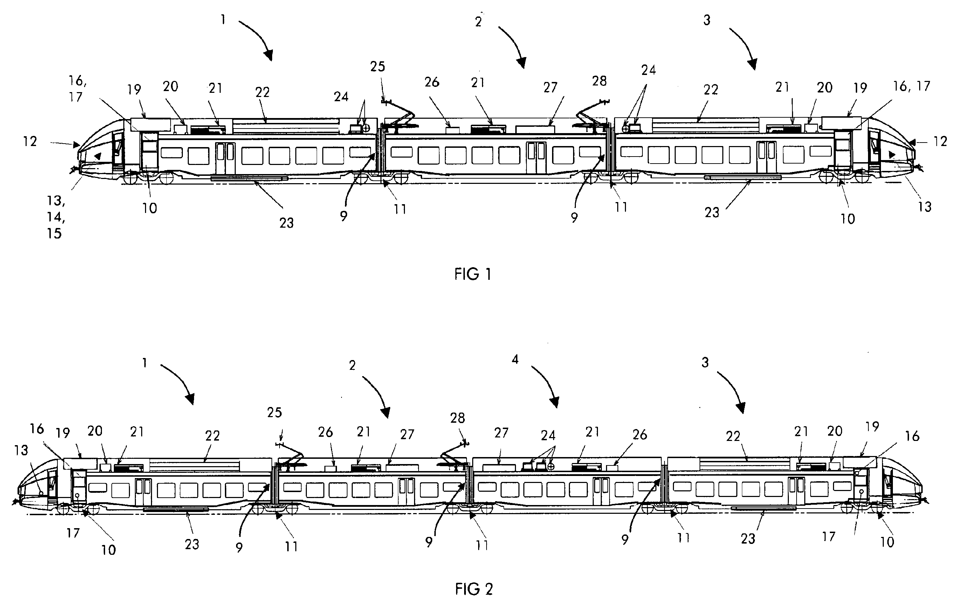

On va maintenant décrire l'implantation dans une rame tri-caisse, c'est-à-dire à trois véhicules 1, 2, 3 telle que décrite sur la figure 1, de la gauche vers la droite. La rame comprend deux véhicules d'extrémité 1, 3 et un véhicule interposé 2 . Dans cette rame, un bogie moteur 10 est disposé à chaque extrémité, chacun comprenant deux moteurs de traction électriques - avantageusement des moteurs à aimants permanents - donc deux essieux moteurs. Les deux autres bogies intermédiaires sont des bogies porteurs 11, du type « Jakobs » ou inter-caisse. Ce type de bogie comporte deux systèmes de suspension secondaire, chaque extrémité d'un véhicule reposant sur une traverse de charge reposant sur un système de suspension secondaire. De ce fait, un essieu d'un bogie porteur 11 est disposé sous chaque extrémité adjacente de deux véhicules adjacents. Il existe d'autres types de bogies porteurs inter-caisse que l'homme du métier peut choisir, notamment des bogies comportant un seul système de suspension secondaire.

L'extrémité de la rame est réservée à une cabine 12 pour le conducteur disposée en partie au-dessus du bogie moteur 10. La cabine 12 est légèrement en porte-à-faux sur le châssis du véhicule d'extrémité 1, et loge notamment l'appareil de climatisation 13 de la cabine, son armoire basse tension 14 et son armoire électronique 15. Au-dessus du bogie moteur 10, à l'intérieur du véhicule d'extrémité 1, adjacent à la cabine 12 et juste derrière celle-ci, sont disposés les batteries 16, les chargeurs de batterie 17 et la commande du convertisseur statique 18 délivrant la tension continue aux équipements auxiliaires, répartis dans des armoires disposées de part et d'autre d'un couloir central. La longueur des armoires ne dépasse pas 2 m. Egalement au-dessus du bogie moteur 11 mais dans un caisson disposé sur le toit du véhicule est logé le coffre de traction 19, qui comprend deux Ponts Monophasé à Commutation Forcée (PMCF) délivrant chacun une tension continue en entrée d'un onduleur, chaque onduleur délivrant une tension alternative triphasée adéquate au moteur du bogie moteur 10. Egalement en toiture mais disposés au-dessus du compartiment voyageur sont disposés successivement un dispositif de freinage rhéostatique 20, un appareil de climatisation 21 du compartiment voyageurs et un groupe électrogène 22. En variante, il peut être prévu deux groupes électrogènes 22 plus petits, dont la puissance cumulée est équivalente à celle fournie par un seul groupe, notamment pour des raisons de redondance et de fiabilité. Sous le compartiment voyageurs de ce véhicule 1, en sous-châssis, est disposé un réservoir de carburant 23. Ainsi, l'essentiel des composants du groupe d'équipements «traction» est rassemblé à proximité du bogie moteur 10.

A son extrémité opposée à la cabine 12 et approximativement au-dessus d'un essieu porteur du bogie porteur 11, le véhicule d'extrémité 1 comprend un groupe moto-compresseur et son réservoir principal 24, disposés en toiture. Un couloir central disposé à l'intérieur d'une intercirculation 9 permet de passer au véhicule interposé 2 adjacent.

Ce véhicule 2, appelé intermédiaire dans la suite de la description, comporte en toiture, à son extrémité orientée vers la cabine de conduite 12 un premier dispositif de raccordement 25 au réseau (pantographe) adapté pour collecter une première tension d'alimentation, typiquement du 1500 V continu, puis disposés successivement, un disjoncteur continu 26, un appareil de climatisation 21 du compartiment voyageurs du véhicule intermédiaire 2, un transformateur 27, adapté pour recevoir du 25 KV alternatif / 1,5 KV continu et enfin un second dispositif de raccordement 28 au réseau adapté pour collecter une seconde tension d'alimentation, typiquement du 25 kV 50 Hz ainsi que les équipements haute tension associés (essentiellement disjoncteur, sectionneur).

Le transformateur 27 permet d'utiliser la rame sur les réseaux à 1500 V en continu et ceux à 25 KV en alternatif monophasé à 50 Hz. Il est adapté pour recevoir ces 25 KV en alternatif au primaire et comprend quatre enroulements secondaires. Chaque enroulement secondaire alimente un pont monophasé à commutation forcée d'un coffre de traction 19 et par suite, un essieu moteur de la rame. En variante, dans l'hypothèse où l'on désire que la rame soit utilisable à la fois sous 1500 volts en continu et 3000 volts en continu, le transformateur 27 est alors constitué d'une cuve comportant quatre inductances - une pour chaque essieu moteur- lissant la tension d'alimentation. Le coffre électronique de traction 19 et le convertisseur statique sont prévus pour fonctionner sous 1500 V en continu. D'autre part, un hacheur est ajouté dans l'installation transformant le 3000 V en continu en 1500 V en continu.

Un couloir central disposé à l'intérieur d'une intercirculation 9 permet de passer au véhicule adjacent d'extrémité 3. Ce véhicule d'extrémité 3 est identique au véhicule d'extrémité 1 et comporte les mêmes éléments, disposés de la même façon, en toiture, à l'intérieur et en sous-châssis. Il est simplement retourné par rapport au véhicule d'extrémité 1 pour être couplé au véhicule intermédiaire 2. Il ne sera donc pas décrit plus en détail ci-après.

Le plancher bas intégral est obtenu par la combinaison de l'utilisation astucieuse de l'espace disponible pour les équipements et de l'alternance judicieuse des véhicules reposant sur trois et deux essieux.

Ainsi, la disposition de tous les équipements - à l'exception du réservoir à carburant et des batteries - en toiture de tous les véhicules libère l'espace en sous-châssis. Cet espace est employé pour disposer un réservoir de carburant de volume conséquent qui utilise au mieux la longueur et la largeur du sous-châssis -qui n'est donc occupée par aucun autre équipement - sans engager la hauteur de plancher. En effet, la forme du réservoir n'est pas conditionnée par son contenant, au contraire des coffres de traction, armoires et autres caissons dont la forme est conditionnée par la taille et forme des équipements contenus.

L'espace allant de l'arrière de la cabine jusqu'à environ ¾ de la longueur du bogie moteur est utilisé pour placer les batteries et la commande du convertisseur statique. Cet espace n'est plus utilisable par les voyageurs mais il ne gêne en rien leur circulation puisqu'il est en extrémité de compartiment voyageurs et qu'il ne communique avec aucun autre véhicule. Le compartiment voyageur débute ainsi au dessus du bogie moteur 10 et permet au moyen d'une pente descendante dans le couloir central d'au plus 8% de rejoindre le plancher disposé à la hauteur de la porte d'accès au véhicule 1, soit environ à 600 mm mesuré depuis la hauteur des rails. Le plancher reste à cette hauteur sur une grande partie de la longueur du véhicule 1. Une pente ascendante dans le couloir central d'au plus 8% est amorcée pour franchir le bogie porteur inter-caisse 11, pour arriver à une hauteur d'environ 840 mm. Dans l'intercirculation, le plancher est sensiblement à cette hauteur, avant de redescendre dans le couloir central par une autre pente à au plus 8% vers le plancher disposé à 600 mm du véhicule intermédiaire 2. Les mêmes pentes sont utilisées pour franchir le deuxième bogie porteur inter-caisse 11. Le véhicule d'extrémité 3 étant identique au véhicule d'extrémité 1, une pente d'au plus 8% entre le plancher du véhicule d'extrémité 3 situé à 600 mm et le plancher situé au-dessus de l'extrémité du bogie moteur 10 est également employée.

Le fait d'interposer au moins un véhicule reposant sur deux essieux entre deux véhicules reposant sur trois essieux permet de répartir les masses et de respecter les charges maximales admissibles à l'essieu. En effet, le véhicule intermédiaire 2 reposant sur deux essieux comprend moins d'équipements que les véhicules reposant sur trois essieux. La masse de ces équipements est cependant ajustée pour arriver à la limite de charge pour chacun des essieux. Ainsi, la caisse du véhicule d'extrémité 1 ou 3, le coffre de traction 19, le rhéostat de freinage 20, le ou les groupes électrogène 22 et le réservoir de carburant 23 présentent une masse totale plus élevée que la masse totale de la caisse du véhicule intermédiaire 2, des deux pantographes 25 et 28, du disjoncteur 26 et du transformateur 27, mais leurs rapports respectifs par le nombre d'essieux du véhicule permet de respecter la charge de 17 t par essieu en charge normale. De plus, le regroupement sur les véhicules d'extrémités 1, 3 du groupe fonctionnel « traction » et sur le véhicule intermédiaire 2 du groupe fonctionnel « électrique » permet de réduire la longueur de câbles nécessaires pour assurer la liaison entre les matériels d'un même groupe.

On va maintenant décrire l'implantation dans une rame quadri-caisse, c'est-à-dire à quatre véhicules telle que celle représentée sur la figure 2, obtenue en interposant dans la rame tri-caisse décrite précédemment un véhicule additionnel 4, entre le véhicule intermédiaire 2 et l'un des véhicules d'extrémité 1, 3. Ce véhicule additionnel 4 comporte en toiture, depuis l'extrémité adjacente au véhicule intermédiaire 2 un transformateur 27, deux groupes moto-compresseurs 24 et leur réservoir principal, un appareil de climatisation 21 du compartiment voyageurs du véhicule additionnel 4 et un disjoncteur 26. Le véhicule additionnel 4 repose à chacune de ses extrémités sur un essieu d'un bogie porteur 11 inter-caisse, partagé d'un côté avec le véhicule intermédiaire 2 et de l'autre côté avec le véhicule d'extrémité 3. Les véhicules 1, 2 et 3 sont identiques à ceux de la rame décrite précédemment, mais il est prévu dans les rames à quatre véhicules, deux transformateurs 27 à deux enroulements secondaires, chacun délivrant une tension continue à l'entrée de chaque PMCF d'un coffre de traction 19. Ainsi, il y a systématiquement un transformateur 27 associé à un coffre de traction 19 pilotant les deux moteurs d'un bogie moteur 10 de la rame. Les transformateurs 27 sont ainsi de types différents de celui de la rame tri-caisse. Ils peuvent être choisis pour que la rame soit mono-tension (chaque transformateur est constitué d'une cuve avec deux inductances délivrant du 1500 V), soit bi-tension (chaque transformateur est du type 25 KV alternatif / 1,5 KV continu ou 25 KV alternatif / 15 KV alternatif) soit encore tri-tension (chaque transformateur est du type 25 KV alternatif / 15 KV alternatif / 1,5 KV continu).

Une autre différence avec la rame tri-caisse est que les groupes moto-compresseurs 24 sont déplacés des véhicules d'extrémité 1 et 3 vers le véhicule additionnel 4, pour une meilleure répartition des masses à l'essieu le long de la rame.

Les véhicules intermédiaire 2 et additionnel 4 ont une caisse identique, identique également à la caisse du véhicule intermédiaire 2 de la rame tri-caisse.

Le plancher est bas sur toute la longueur de la rame, les mêmes pentes dans le couloir central d'au plus 8% étant employées comme sur la rame tri-caisse entre l'extrémité du véhicule intermédiaire 2 et l'extrémité du véhicule additionnel 4, et entre l'extrémité du véhicule additionnel 4 et l'extrémité du véhicule d'extrémité 3.

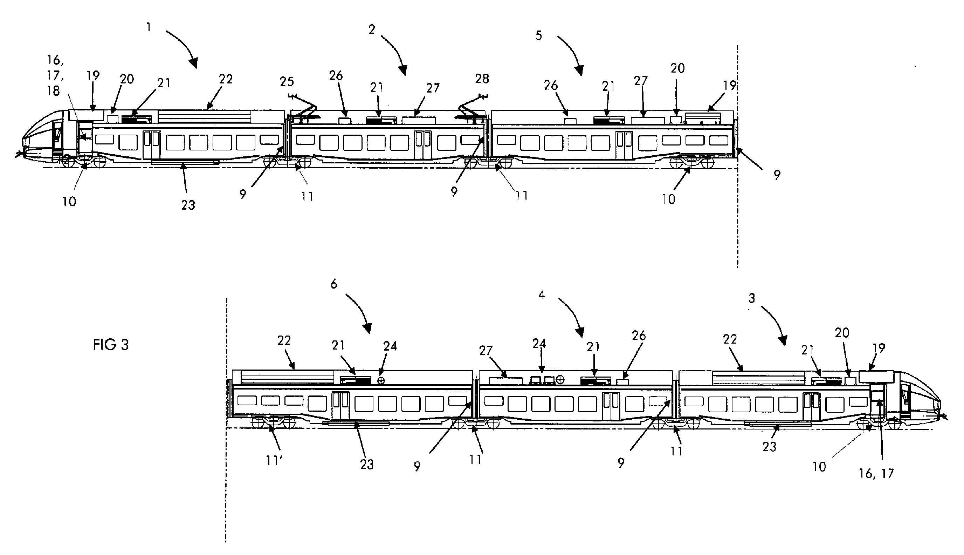

On va maintenant décrire l'implantation dans une rame à six véhicules 1, 2, 3, 4, 5, 6 reliés par des moyens de liaison amovible, comme une barre d'attelage, telle que celle représentée sur la figure 3. Pour des raisons de clarté, la rame est représentée scindée en deux parties. Cette rame est obtenue en interposant dans la rame à quatre véhicules décrite précédemment deux véhicules complémentaires 5 et 6, entre le véhicule intermédiaire 2 et le véhicule additionnel 4. Les véhicules d'extrémité 1, 3 et les véhicules intermédiaires 2 et additionnels 4 de cette rame sont identiques à ceux de la rame précédente et ne sont donc pas plus décrits.

Le premier véhicule complémentaire 5 repose à une première extrémité, orientée vers le véhicule intermédiaire 2, sur un essieu d'un bogie moteur 11 inter-caisse. Il repose à son autre extrémité entièrement sur un bogie moteur 10 classique, qui n'est pas inter-caisse. Ce bogie comprend deux moteurs de traction électrique. Symétriquement, le second véhicule complémentaire 6 repose à une première extrémité, orientée vers le véhicule additionnel 4, sur un essieu d'un bogie porteur 11 inter-caisse. Il repose à son autre extrémité entièrement sur un bogie porteur 11' classique, qui n'est pas inter-caisse. Les deux véhicules complémentaires 5, 6 ont des caisses identiques, et reposent chacun sur trois essieux. Un couloir central disposé à l'intérieur d'une intercirculation 9 permet le passage d'un véhicule complémentaire à un autre. La partie des compartiments voyageurs de ces véhicules, reposant chacun entièrement sur un bogie porteur 11' ou moteur 10, est donc plus longue que la partie d'un véhicule intermédiaire 2 ou additionnel 4 reposant sur un essieu d'un bogie porteur inter-caisse 11. Pour cette raison, la caisse des véhicules complémentaires 5, 6 est plus longue que la caisse des véhicules intermédiaire 2 et additionnel 4. Les extrémités des véhicules complémentaires 5, 6 reposant sur un bogie à deux essieux sont adjacentes et forment une césure. Ils sont reliés classiquement par une barre d'attelage.

Le véhicule complémentaire 5 comporte des équipements disposés uniquement en toiture. Sont ainsi logés, depuis approximativement le milieu de la toiture vers la césure, un disjoncteur 26, un appareil de climatisation 21 du compartiment voyageurs du véhicule complémentaire 5, un transformateur 27, un dispositif de freinage rhéostatique 20 et approximativement au-dessus du bogie moteur 10, un coffre de traction 19.

Le véhicule complémentaire 6 comporte approximativement au-dessus du compartiment voyageur disposé au dessus du bogie porteur 11' au moins un groupe électrogène 22, puis un appareil de climatisation 21 du compartiment voyageurs du véhicule complémentaire 6 et un réservoir de fluide pour un groupe moto-compresseur. Sous le compartiment voyageur entre les deux bogies, est disposé en sous-châssis un réservoir de carburant 23.

Dans cette configuration, le coffre de traction 19 et le rhéostat de freinage 20 sont disposés en toiture au-dessus du bogie moteur 10 de la voiture complémentaire 5, alors que le reste du groupe fonctionnel « traction » est disposé dans la voiture complémentaire 6. En effet, les caisses de ces véhicules étant plus longues que les autres caisses, le poids de ces véhicules est augmenté d'autant. Le déport du coffre de traction 19 et du rhéostat de freinage 20 sur le véhicule complémentaire 5 adjacent, au plus près du bogie moteur 10, permet de respecter la charge à l'essieu tout en limitant les longueurs de câble nécessaire.

En variante non représentée, le véhicule complémentaire 5 repose à une première extrémité, orientée vers le véhicule intermédiaire 2, sur un essieu d'un bogie moteur 11 inter-caisse et à l'autre extrémité sur un bogie porteur 11'. Il comporte en toiture un appareil de climatisation 21, un dispositif de freinage rhéostatique 20 et approximativement au-dessus du bogie porteur 11', un coffre de traction 19. Le véhicule complémentaire 6 repose à une première extrémité, orientée vers le véhicule additionnel 4, sur un essieu d'un bogie porteur 11 inter-caisse et à son autre extrémité entièrement sur un bogie moteur 10 classique, qui n'est pas inter-caisse. Le véhicule complémentaire 6 comporte approximativement au-dessus du compartiment voyageur disposé au dessus du bogie moteur 10 un ou deux groupes électrogène 22, puis un appareil de climatisation 21 et un transformateur 27. Sous le compartiment voyageur entre les deux bogies, est disposé en sous-châssis un réservoir de carburant 23. Dans cette rame, le transformateur 27 est du même type que ceux de la rame à quatre véhicules et comporte deux enroulements secondaires alimentant le coffre de traction 19 de la voiture complémentaire 5 ou 6 qui le reçoit, et qui est donc associé au bogie moteur 10 de la voiture complémentaire 5 ou 6 adéquate.

Ces deux variantes permettent de respecter la charge à l'essieu imposée.

Par ailleurs, cette rame est sécable, du fait de la barre d'attelage. Ceci présente notamment l'avantage pour un opérateur de rentrer une rame longue en deux demi tronçons dans des hangars de maintenance dont les voies sont courtes.

Le plancher est également bas sur toute la longueur de la rame, pour les mêmes raisons que précédemment puisque une rame six-caisses est basée sur l'architecture d'une rame quadri-caisse et également du fait de l'allongement de la longueur des caisses des véhicules complémentaires 5, 6, notamment à leurs extrémités reposant sur des bogies classiques.

En effet, cet allongement permet de maintenir un plancher bas à 600 mm sur une longueur assez importante du véhicule, car un bogie classique motorisé est légèrement plus haut qu'un bogie inter-caisse. Pour respecter une pente maximale de 8% dans le couloir central, il faut donc soit reporter le début de la pente un peu plus en amont dans le véhicule, soit allonger la longueur du véhicule.

Le bogie moteur 10 en partie centrale de la rame apporte la puissance nécessaire permettant à toutes les rames de circuler jusqu'à une vitesse de 160 km/h. En modifiant l'aménagement intérieur (sièges et casiers à bagages), les rames selon l'invention peuvent être utilisées en opération régionale, interville ou périurbaine, autour des grosses agglomérations. L'accélération entre 0 et 50 km/h varie en fonction de la composition de la rame et du ou des modes d'alimentation de cette rame. Le tableau ci-dessous donne un exemple des valeurs d'accélération atteintes:

| Formation | Accélération (m/s⁻²) |
|---|---|
| Trois véhicules | 0,74 - 0,89 |
| Quatre véhicules | 0,53 - 0,94 |
| Six véhicules | 0,53 - 0,84 |

Des convois peuvent être constitués en attelant plusieurs rames par un dispositif d'attelage automatique. Avec deux rames, on peut ainsi constituer un convoi de six à douze véhicules. Ainsi, il est possible de créer des convois de grande capacité à partir d'un faible nombre de modèles de véhicules.

Les rames et convois étant toujours motorisés approximativement proportionnellement au nombre de leurs véhicules et ainsi à leur masse, on ne crée pas de rame ou de convoi lent par suite de sa sous-motorisation, affectant la régularité du trafic sur la voie sur laquelle circulerait une telle rame ou un tel convoi.

Cette conception permet d'une part au transporteur de répondre aisément au besoin du moment en associant deux rames pour constituer un convoi.

Une telle conception permet de réaliser des rames de différentes longueur avec le nombre minimal de bogies, compte-tenu des contraintes de charge à l'essieu.

Cette conception permet également une répartition régulière des charges sur les essieux, et ainsi on évite les essieux surchargés et travaillant très près de la limite autorisée par les installations de voie ferrée avec tous les inconvénients que comporte une telle pratique.

Cependant, bien entendu, l'invention n'est pas limitée aux formes de réalisation ci-dessus décrites et représentées, et on pourra en prévoir d'autres sans sortir de son cadre.

## Revendications

1. Rame ferroviaire modulaire formée d'au moins trois véhicules (1, 2, 3, 4, 5, 6), comportant deux véhicules d'extrémité (1, 3) reposant chacun à leur extrémité libre sur un bogie moteur (10) comportant au moins un moteur de traction électrique, et sur leur extrémité opposée sur un essieu d'un bogie porteur (11) inter-caisse à deux essieux porteurs, au moins un véhicule (2, 4, 5, 6) interposé entre les deux véhicules d'extrémité (1, 3) reposant à chaque extrémité sur un essieu d'un bogie porteur (11) inter-caisse, et des matériels embarqués comprenant au moins un dispositif de raccordement à un réseau d'alimentation en énergie électrique (25, 28), au moins un transformateur d'énergie (27), au moins un coffre électronique de traction (19), au moins un dispositif de freinage rhéostatique (20), au moins un groupe électrogène (22), au moins un réservoir de carburant liquide (23), au moins un ensemble d'accumulateurs (16), **caractérisée en ce que** au moins un réservoir de carburant liquide (23) est disposé en sous-châssis d'un véhicule d'extrémité (1, 3), **en ce qu'**au moins un ensemble d'accumulateurs (16) est disposé à l'intérieur d'un véhicule d'extrémité (1, 3) approximativement au-dessus du bogie moteur (10), et **en ce que** tous les autres matériels embarqués (19, 20, 21, 22, 25, 27, 28) sont disposés en toiture, répartis sur les véhicules (1, 2, 3, 4, 5, 6) de la rame.

2. Rame ferroviaire selon la revendication 1, **caractérisée en ce que**
- chaque véhicule d'extrémité (1, 3) comprend au moins un groupe électrogène (22), un dispositif de freinage rhéostatique (20) et un coffre électronique de traction (19),
- au moins un véhicule interposé est un véhicule intermédiaire (2), comprenant au moins un dispositif de raccordement à un réseau d'alimentation en énergie électrique (25, 28) et au moins un transformateur d'énergie (27).

3. Rame ferroviaire selon la revendication 1 ou 2, **caractérisée en ce que** le véhicule intermédiaire (2) comporte deux dispositifs de raccordement à un réseau d'alimentation en énergie électrique (25, 28) adaptés pour collecter deux tensions différentes d'alimentation en énergie.

4. Rame ferroviaire selon l'une des revendications précédentes, **caractérisée en ce qu'**au moins un véhicule interposé est un véhicule additionnel (4), comprenant un transformateur d'énergie (27) et deux groupes moto-compresseurs (24).

5. Rame ferroviaire selon l'une des revendications 1 à 4, **caractérisée en ce qu'**au moins un véhicule interposé est un véhicule complémentaire (5, 6), reposant sur un bogie à deux essieux (10, 11') disposé à l'une de ses extrémités, et sur un essieu d'un bogie porteur (11) inter-caisse à l'autre extrémité.

6. Rame ferroviaire selon la revendication 5, **caractérisée en ce qu'**au moins un véhicule complémentaire (5, 6) comprend un coffre électronique de traction (19) et un dispositif de freinage rhéostatique (20) disposés en toiture.

7. Rame ferroviaire selon la revendication 5 ou 6, **caractérisée en ce qu'**au moins un véhicule complémentaire (5, 6) comprend au moins un groupe électrogène (22) disposé en toiture et un réservoir de carburant (23) disposé en sous-châssis.

8. Rame ferroviaire selon la revendication 6 ou 7, **caractérisée en ce que** le bogie du véhicule complémentaire (5, 6) disposé à l'une de ses extrémités est un bogie porteur (11').

9. Rame ferroviaire selon la revendication 6 ou 7, **caractérisée en ce que** le bogie du véhicule complémentaire (5, 6) disposé à l'une de ses extrémités est un bogie moteur (10).

10. Rame ferroviaire selon l'une des revendications 5 à 9, **caractérisée en ce que** les extrémités des véhicules complémentaires (5, 6) reposant sur un bogie à deux essieux (10, 11') sont adjacentes.

11. Rame ferroviaire selon l'une des revendications 1 à 3, **caractérisée en ce que** le transformateur d'énergie (27) est adapté pour recevoir une ou deux tensions d'alimentation en énergie, et est associé aux deux bogies moteurs (10).

12. Rame ferroviaire selon l'une des revendications 4 à 10, **caractérisée en ce qu'**un transformateur d'énergie (27) est associé à chaque bogie moteur (10), et est adapté pour recevoir une, deux ou trois tensions d'alimentation en énergie.

13. Rame ferroviaire selon l'une des revendications précédentes, **caractérisée en ce qu'**elle comporte un plancher continu dans le couloir central sur toute sa longueur, pouvant présenter des pentes inférieures ou égales à 8%.

14. Convoi ferroviaire **caractérisée en ce qu'**il comporte au moins deux rames selon l'un quelconque des revendications précédentes, reliées par des moyens de liaison.

## Claims

1. Modular set of rail wagons, formed of at least three vehicules (1, 2, 3, 4, 5, 6), comprising two end vehicles (1, 3) each resting at their free end on a motored bogie (10) comprising at least one electric traction motor, and on their opposite end on an axle of a between-car unpowered bogie (11) with two unpowered axles, at least one vehicle (2, 4, 5, 6) interposed between the two end vehicles (1, 3) resting at each end on an axle of a between-car unpowered bogie (11), and onboard equipment comprising at least one device for connecting to an electrical power supply network (25, 28), at least one power transformer (27), at least one traction electronic unit (19), at least one rheostatic braking device (20), at least one generator set (22), at least one liquid fuel tank (23), at least one set of storage cells (16), **characterized in that** at least one liquid fuel tank (23) is positioned in the underframe of an end vehicle (1, 3), **in that** at least one set of storage cells (16) is positioned inside an end vehicle (1, 3) approximately above the motored bogie (10), and **in that** all the other onboard equipment (19, 20, 21, 22, 25, 27, 28) is positioned in the roof, distributed over the vehicles (1, 2, 3, 4, 5, 6) of the set of wagons.

2. Set of rail wagons according to Claim 1, **characterized in that**
- each end vehicle (1, 3) comprises at least one generator set (22), a rheostatic braking device (20) and an electronic traction unit (19),
- at least one interposed vehicle is an intermediate vehicle (2), comprising at least one device for connecting to an electrical power supply network (25, 28) and at least one power transformer (27).

3. Set of rail wagons according to Claim 1 or 2, **characterized in that** the intermediate vehicle (2) comprises two devices for connecting to an electrical power supply network (25, 28) suitable for collecting two different power supply voltages.

4. Set of rail wagons according to one of the preceding claims, **characterized in that** at least one interposed vehicle is an additional vehicle (4), comprising a power transformer (27) and two compressor units (24).

5. Set of rail wagons according to one of Claims 1 to 4, **characterized in that** at least one interposed vehicle is a complementary vehicle (5, 6), resting on a bogie with two axles (10, 11') positioned at one of its ends, and on an axle of a between-car unpowered bogie (11) at the other end.

6. Set of rail wagons according to Claims 5, **characterized in that** at least one complementary vehicle (5, 6) comprises a traction electronic unit (19) and a rheostatic braking device (20) positioned in the roof.

7. Set of rail wagons according to Claim 5 or 6, **characterized in that** at least one complementary vehicle (5, 6) comprises at least one generator set (22) positioned in the roof and a fuel tank (23) positioned in the underframe.

8. Set of rail wagons according to Claim 6 or 7, **characterized in that** the bogie of the complementary vehicle (5, 6) positioned at one of its ends is an unpowered bogie (11').

9. Set of rail wagons according to Claim 6 or 7, **characterized in that** the bogie of the complementary vehicle (5, 6) positioned at one of its ends is a motored bogie (10).

10. Set of rail wagons according to one of Claims 5 to 9, **characterized in that** the ends of the complementary vehicles (5, 6) resting on a bogie with two axles (10, 11') are adjacent.

11. Set of rail wagons according to one of Claims 1 to 3, **characterized in that** the power transformer (27) is suitable for receiving one or two power supply voltages, and is associated with the two motored bogies (10).

12. Set of rail wagons according to one of Claims 4 to 10, **characterized in that** a power transformer (27) is associated with each motored bogie (10), and is suitable for receiving one, two or three power supply voltages.

13. Set of rail wagons according to one of the preceding claims, **characterized in that** it comprises a continuous floor in the central corridor over its entire length, possibly having slopes less than or equal to 8%.

14. Rail convoy, **characterized in that** it comprises at least two sets of wagons according to any one of the preceding claims, linked by link means.

## Patentansprüche

1. Modulare Eisenbahn-Wagengruppe, die von mindestens drei Fahrzeugen (1, 2, 3, 4, 5, 6) geformt wird, die zwei Endfahrzeuge (1, 3) aufweist, die je an ihrem freien Ende auf einem Triebdrehgestell (10), das mindestens einen elektrischen Fahrmotor aufweist, und an ihrem entgegengesetzten Ende auf einer Achse eines zwischen Wagenkästen befindlichen Laufdrehgestells (11) mit zwei Tragachsen ruhen, wobei mindestens ein zwischen die zwei Endfahrzeuge (1, 3) eingefügtes Fahrzeug (2, 4, 5, 6) an jedem Ende auf einer Achse eines zwischen Wagenkästen befindlichen Laufdrehgestells (11) ruht, und mitgeführte Ausrüstungen mindestens eine Anschlussvorrichtung an ein elektrisches Energieversorgungsnetz (25, 28), mindestens einen Energietransformator (27), mindestens einen elektronischen Antriebskasten (19), mindestens eine Widerstandsbremsvorrichtung (20), mindestens einen Stromerzeuger (22), mindestens einen Flüssigtreibstofftank (23), mindestens eine Akkumulatoreneinheit (16) enthalten, **dadurch gekennzeichnet, dass** mindestens ein Flüssigtreibstofftank (23) unter dem Fahrgestell eines Endfahrzeugs (1, 3) angeordnet ist, dass mindestens eine Akkumulatoreneinheit (16) im Inneren eines Endfahrzeugs (1, 3) in etwa über dem Triebdrehgestell (10) angeordnet ist, und dass alle anderen mitgeführten Ausrüstungen (19, 20, 21, 22, 25, 27, 28) am Dach auf die Fahrzeuge (1, 2, 3, 4, 5, 6) der Wagengruppe verteilt angeordnet sind.

2. Eisenbahn-Wagengruppe nach Anspruch 1, **dadurch gekennzeichnet, dass**
- jedes Endfahrzeug (1, 3) mindestens einen Stromerzeuger (22), eine Widerstandsbremsvorrichtung (20) und einen elektronischen Antriebskasten (19) enthält,
- mindestens ein eingefügtes Fahrzeug ein Zwischenfahrzeug (2) ist, das mindestens eine Anschlussvorrichtung an ein elektrisches Energieversorgungsnetz (25, 28) und mindestens einen Energietransformator (27) enthält.

3. Eisenbahn-Wagengruppe nach Anspruch 1 oder 2, **dadurch gekennzeichnet, dass** das Zwischenfahrzeug (2) zwei Anschlussvorrichtungen an ein elektrisches Energieversorgungsnetz (25, 28) aufweist, die geeignet sind, um zwei verschiedene Energieversorgungsspannungen zu sammeln.

4. Eisenbahn-Wagengruppe nach einem der vorhergehenden Ansprüche, **dadurch gekennzeichnet, dass** mindestens ein eingefügtes Fahrzeug ein zusätzliches Fahrzeug (4) ist, das einen Energietransformator (27) und zwei Motorkompressoren (24) enthält.

5. Eisenbahn-Wagengruppe nach einem der Ansprüche 1 bis 4, **dadurch gekennzeichnet, dass** mindestens ein eingefügtes Fahrzeug ein komplementäres Fahrzeug (5, 6) ist, das auf einem Drehgestell mit zwei Achsen (10, 11'), das an einem seiner Enden angeordnet ist, und auf einer Achse eines zwischen Wagenkästen befindlichen Laufdrehgestells (11) am anderen Ende ruht.

6. Eisenbahn-Wagengruppe nach Anspruch 5, **dadurch gekennzeichnet, dass** mindestens ein komplementäres Fahrzeug (5, 6) einen elektronischen Antriebskasten (19) und eine Widerstandsbremsvorrichtung (20) enthält, die am Dach angeordnet sind.

7. Eisenbahn-Wagengruppe nach Anspruch 5 oder 6, **dadurch gekennzeichnet, dass** mindestens ein komplementäres Fahrzeug (5, 6) mindestens einen Stromerzeuger (22), der am Dach angeordnet ist, und einen unter dem Fahrgestell angeordneten Treibstofftank (23) enthält.

8. Eisenbahn-Wagengruppe nach Anspruch 6 oder 7, **dadurch gekennzeichnet, dass** das Drehgestell des komplementären Fahrzeugs (5, 6), das an einem seiner Enden angeordnet ist, ein Laufdrehgestell (11') ist.

9. Eisenbahn-Wagengruppe nach Anspruch 6 oder 7, **dadurch gekennzeichnet, dass** das Drehgestell des komplementären Fahrzeugs (5, 6), das an einem seiner Enden angeordnet ist, ein Triebdrehgestell (10) ist.

10. Eisenbahn-Wagengruppe nach einem der Ansprüche 5 bis 9, **dadurch gekennzeichnet, dass** die Enden der komplementären Fahrzeuge (5, 6), die auf einem Drehgestell mit zwei Achsen (10, 11') ruhen, benachbart sind.

11. Eisenbahn-Wagengruppe nach einem der Ansprüche 1 bis 3, **dadurch gekennzeichnet, dass** der Energietransformator (27) geeignet ist, um eine oder zwei Energieversorgungsspannungen zu empfangen, und den zwei Triebdrehgestellen (10) zugeordnet ist.

12. Eisenbahn-Wagengruppe nach einem der Ansprüche 4 bis 10, **dadurch gekennzeichnet, dass** ein Energietransformator (27) jedem Triebdrehgestell (10) zugeordnet und geeignet ist, um eine, zwei oder drei Energieversorgungsspannungen zu empfangen.

13. Eisenbahn-Wagengruppe nach einem der vorhergehenden Ansprüche, **dadurch gekennzeichnet, dass** sie einen durchgehenden Boden im Mittelgang über ihre ganze Länge aufweist, der Neigungen von weniger als oder gleich 8% haben kann.

14. Eisenbahnzug, **dadurch gekennzeichnet, dass** er mindestens zwei Wagengruppen nach einem der vorhergehenden Ansprüche aufweist, die durch Verbindungseinrichtungen verbunden sind.
